# EUROPÄISCHE PATENTSCHRIFT

(11) **EP 3 577 708 B1**
(45) Veröffentlichungstag und Bekanntmachung des Hinweises auf die Patenterteilung: **02.12.2020**
(21) Anmeldenummer: 17832907.4
(22) Anmeldetag: 20.12.2017
(51) Int. Cl.: H01M 8/0206, H01M 8/0232, H01M 8/0265, H01M 8/0254, H01M 8/1018

(54) **BIPOLARPLATTE MIT VERBESSERTER STRÖMUNGSVERTEILUNG FÜR EINE BRENNSTOFFZELLE**
BIPOLAR PLATE WITH IMPROVED GAS FLOW DISTRIBUTION FOR A FUEL CELL
PLAQUE BIPOLAIRE AYANT DISTRIBUTION DE GAZ AMÉLIORÉE POUR PILE À COMBUSTIBLE

(30) Priorität: 31.01.2017 DE 102017101793; 19.12.2017 DE 102017130489
(43) Veröffentlichungstag der Anmeldung: 11.12.2019
(73) Patentinhaber: Schaeffler Technologies AG & Co. KG, 91074 Herzogenaurach (DE)
(72) Erfinder: HAUßMANN, Jan, 76356 Weingarten (Baden) (DE); ÖSTREICHER, Hanna, 76199 Karlsruhe (DE)
(86) Internationale Anmeldenummer: PCT/DE2017/101086
(87) Internationale Veröffentlichungsnummer: WO 2018/141319

(56) Entgegenhaltungen:
- DE-A1-102014 223 735
- JP-A- H04 322 062
- US-A1- 2013 149 633
- US-A1- 2016 181 625

## Beschreibung

Die Erfindung betrifft eine Bipolarplatte für eine Brennstoffzelle. Die Bipolarplatte ist ein wesentlicher Teil einer Polymer-Elektrolyt-Membran-Brennstoffzelle und verbindet einzelne Zellen zu einem Brennstoffzellenstapel in Reihe. Dabei besteht eine Zelle aus einer Bipolarplatte, einer Gasdiffusionslage und einer Katalysatorschicht jeweils auf Kathoden- und Anodenseite, die durch eine Membran elektrisch getrennt sind. Die Bipolarplatte weist sowohl auf der Anodenseite, als auch auf der Kathodenseite ein Gasverteilerfeld auf, welche unterschiedlich oder identisch geformt sein können. Die Gasverteilerfelder haben die Aufgabe die Gase gleichmäßig zu verteilen, so dass eine homogene Verteilung in der Katalysatorschicht erreicht wird. In der Katalysatorschicht läuft die Reaktion unter Beteiligung der Reaktionsgase ab. In der Katalysatorschicht der Kathode entsteht dabei Wasser, das aufgrund einer Temperatur von unter 100°C auch flüssig auftritt. Die Membran ist wasserdurchlässig, so dass flüssiges Wasser sowohl auf der Kathoden- als auch auf der Anodenseite auftreten kann. Die Bipolarplatte hat neben der Gaszuführung auch die Aufgabe das entstehende Wasser aus der Zelle auszutragen. Daneben muss eine gute elektrische und thermische Leitung gewährleistet sein.

Aus der DE 10 2007 009 905 A1 ist eine Brennstoffzelle bekannt, die durch Stapeln einer Membranelektrodenanordnung und eine Bipolarplatte in einer horizontalen Stapelrichtung gebildet ist. Die Membranelektrodenanordnung enthält ein Paar von Elektroden und eine zwischen Elektroden angeordnete Elektrolytmembran. Ferner weist die Bipolarplatte eine rechteckige Form auf, deren lange Seiten sich in Schwerkraftrichtung erstrecken und deren kurze Seiten sich horizontal in Richtung orthogonal zur Stapelrichtung erstrecken, wobei die Bipolarplatte ein Gasverteilerfeld aufweist, um eines der Reaktionsgase in der Schwerkraftrichtung entlang einer Elektrodenoberfläche zu leiten, wobei das Gasverteilerfeld an einer oberen Position ein Verteilerfeld am Gaseinlass und an einer unteren Position ein Verteilerfeld am Gasauslass enthält. Ein Reaktionsgaszufuhrkanal zum Zuführen des einen der Reaktionsgase zu dem Gasverteilerfeld und ein Reaktionsgasabführkanal zum Abführen des einen der Reaktionsgase von dem Gasverteilerfeld erstrecken sich in der Stapelrichtung durch die Bipolarplatte hindurch. Der Reaktionsgasabführkanal ist unter dem Verteilerfeld am Gasauslass angeordnet und zumindest das Verteilerfeld am Gasauslass ist zu dem Reaktionsgasabführkanal hin geneigt. Somit werden einerseits Kanäle gebildet, durch die die Reaktionsgase strömen, und andererseits werden Stege gebildet, die die Gasdiffusionslage und damit die Katalysatorschicht elektrisch und thermisch kontaktieren. Üblicherweise stellen sich unter den Stegen kältere und schlecht durchströmte Bereiche ein, die unter feuchten Betriebsbedingungen zu Wasseransammlungen in diesen Bereichen führen. Dies führt in der Regel zu einer schlechteren Leistung der Brennstoffzelle.

Des Weiteren geht aus der DE 10 2015 207 397 A1 eine poröse Kanalstruktur für eine Brennstoffzelle hervor. Die Kanalstruktur umfasst eine Kanalplatte mit einer Mehrzahl Stegteile, die eine Gasdiffusionslage berühren, um einen wellenförmigen Querschnitt in Strömungsrichtung des Gases zu bilden, und eine Mehrzahl Kanalteile, die eine ebene Platte berühren, um Wasserdichtheit herzustellen, sowie eine Kanalöffnung, durch die Reaktionsgas strömt. Die Kanalöffnung ist derart gestanzt, dass sie einen Abschnitt von mindestens entweder einem Stegteil der Mehrzahl Stegteile oder einem Kanalteil der Mehrzahl Kanalteile enthält. Die Kanalplatte wird somit nicht wie in der DE 10 2007 009 905 A1 entlang der sich ergebenden Kanäle, sondern senkrecht dazu durchströmt. Dies wird dadurch erreicht, dass Löcher in einem regelmäßigen Muster vorhanden sind, die Kanäle in der senkrechten Richtung ausbilden. Dabei ergeben sich zwei unterschiedliche Strömungswege. Ein Strömungsweg zwischen der glatten Platte und der Lochplatte und ein Strömungsweg zwischen der Lochplatte und der Gasdiffusionslage. Durch das Muster ergeben sich Querströmungen zwischen der ersten und der zweiten Musterreihe, so dass die sich ergebenden Stegbereiche besser durchströmt sind und das Wasser besser ausgetragen werden kann.

Die US 2013149633 A1 beschreibt einen Separator für eine Brennstoffzelle umfassend eine gewellte Strömungsplatte mit Strömungsöffnungen und eine flache Platte. Die Strömungsöffnungen sind entlang einer Längsrichtung der Strömungsplatte wiederholt angeordnet.

Die Aufgabe der vorliegenden Erfindung besteht darin, eine Bipolarplatte für eine Brennstoffzelle weiterzuentwickeln, wobei insbesondere die Gasdurchströmung der Bipolarplatte verbessert werden soll. Ferner soll auch die Leistungsdichte der gesamten Brennstoffzelle erhöht werden.

Die Lösung dieser Aufgabe ergibt sich aus den Merkmalen des unabhängigen Anspruchs 1. Vorteilhafte Weiterbildungen und Ausgestaltungen der Erfindung können den Unteransprüchen entnommen werden.
Die erfindungsgemäße Bipolarplatte für eine Brennstoffzelle umfasst eine gewellte Platte mit einem Lochmuster, bestehend aus mindestens einer ersten Lochreihe, sowie eine zweite Platte, die an der gewellten Platte abdichtend angeordnet ist, wobei die gewellte Platte aus einem Metallblech ausgebildet ist und eine regelmäßige Wellenform aus ansteigenden und abfallenden Wellen mit Wellenscheiteln aufweist, wobei ferner das Lochmuster zur Durchführung eines Gases im Wesentlichen quer zu der Wellenform vorgesehen ist, wobei in der Draufsicht auf die gewellte Platte eine Anströmrichtung der gewellten Platte senkrecht zu einem Rand der gewellten Platte und zu den Wellenscheiteln ausgerichtet ist, wobei die mindestens eine erste Lochreihe, in Strömungsrichtung des Gases eine jeweilige erste Querschnittöffnung in einer jeweiligen ansteigenden Welle aufweist, die größer ist als eine jeweilige zweite Querschnittöffnung der mindestens einen ersten Lochreihe in einer jeweiligen abfallenden Welle.

Das Lochmuster ist zur Durchführung eines Gases im Wesentlichen quer zu der Wellenform vorgesehen, wobei hier unter "im Wesentlichen quer" zu verstehen ist, dass das Gas die gewellte Platte in der Draufsicht gesehen in einer Anströmrichtung senkrecht zu einem Rand der gewellten Platte anströmt und, im Bereich eines Loches des Lochmusters angekommen, dieses Loch anströmt und in einem Winkelbereich von - 45° bis + 45°, ausgehend von einer in der Draufsicht auf die gewellte Platte senkrecht zum jeweiligen Wellenscheitel verlaufenden Linie, weitergeleitet wird.

Unter einer Lochreihe ist eine Anordnung von Aussparungen oder Löchern zu verstehen, die in Reihe zueinander angeordnet sind. Ferner ist unter einer Querschnittöffnung eine Aussparung in der gewellten Platte zu verstehen. Mit anderen Worten weist die gewellte Platte eine Perforation auf, wobei die Perforation, vorzugsweise mehrere benachbarte Lochreihen aufweist. Jede Lochreihe umfasst mehrere Querschnittöffnungen, wobei in Strömungsrichtung nacheinander abwechselnd eine jeweilige erste Querschnittöffnung und eine jeweilige zweite Querschnittöffnung angeordnet sind. Die jeweilige erste und zweite Querschnittöffnung sind vorteilhafterweise miteinander verbunden und bilden dadurch eine gemeinsame Aussparung aus. Die Querschnittöffnungen sind zur Durchführung eines Gases, insbesondere zur Durchführung eines Brenngases oder eines Oxidationsmittels vorgesehen. Mithin kann die Bipolarplatte sowohl anodenseitig mit Brenngas als auch kathodenseitig mit dem Oxidationsmittel betrieben werden. Die zweite Platte kommt abdichtend an der gewellten Platte zur Anlage und bildet so quer zu der Wellenform Strömungswege für das jeweilige Gas aus. Insbesondere sind eine Vielzahl von Lochreihen nebeneinander angeordnet.
In der Draufsicht auf eine gewellte Platte verläuft eine Lochreihe insbesondere senkrecht zu den Wellenscheiteln der Wellen. Aber auch eine Abweichung des Verlaufs einer Lochreihe von dieser Senkrechten von bis zu α = ± 45° ist von Vorteil. Die Ausrichtung der Lochreihen beeinflusst dabei maßgeblich die Richtung der Strömung des anströmenden Gases zum nächsten Wellenelement.

Aufgrund der Verringerung der jeweiligen zweiten Querschnittöffnung gegenüber der jeweils ersten Querschnittöffnung wird ein erster Teil der Gasströmung durch die Wellenform der gewellten Platte zu einer Gasdiffusionsschicht und somit zum Katalysator gelenkt. Demgegenüber wird ein zweiter Teil der Gasströmung durch die jeweilige zweite Querschnittöffnung zur nächsten Wellenform gelenkt. Dadurch wird sowohl eine bessere Durchmischung der Gasdiffusionslage und der Katalysatorschicht mit Reaktionsgas bewirkt, als auch ein verbesserter Wasseraustrag des Wassers aus der Gasdiffusionslage und der Katalysatorschicht in Richtung Gasverteilerfeld erreicht. Damit werden eine gleichmäßigere Stromdichteverteilung und eine insgesamt bessere Leistung erzielt.

Gemäß einer bevorzugten Ausführungsform weist das Lochmuster mindestens eine zweite Lochreihe auf, die parallel zur ersten Lochreihe und quer zu der Wellenform ausgebildet ist. Insbesondere sind eine Vielzahl von sich abwechselnden ersten und zweiten Lochreihen nebeneinander angeordnet.

Vorzugsweise weist die mindestens eine zweite Lochreihe in Strömungsrichtung des Gases eine jeweilige erste Querschnittöffnung in einer jeweiligen ansteigenden Welle auf, die kleiner oder größer ist als eine jeweilige zweite Querschnittöffnung der mindestens einen zweiten Lochreihe in einer jeweiligen abfallenden Welle. Die jeweilige erste und zweite Querschnittöffnung sind vorteilhafterweise miteinander verbunden und bilden dadurch eine gemeinsame Aussparung aus. Dabei wird aufgrund der Druckverhältnisse ein Teil des Gases von der sich verringernden Querschnittöffnung zu der sich vergrößernden Querschnittöffnung geleitet und damit aufgrund der Querströmungen eine zusätzliche Gasdurchmischung in der Gasdiffusionslage und damit in der Katalysatorschicht in diesem Bereich erreicht.

Gemäß einer weiteren bevorzugten Ausführungsform weist das Lochmuster mindestens eine dritte Lochreihe auf, die parallel zur ersten Lochreihe und quer zu der Wellenform ausgebildet ist. Insbesondere sind eine Vielzahl von sich abwechselnden ersten, zweiten und dritten Lochreihen nebeneinander angeordnet.

Vorzugsweise weist die mindestens eine dritte Lochreihe in Strömungsrichtung des Gases eine gleichbleibende Querschnittöffnung in einer jeweiligen ansteigenden und einer jeweiligen abfallenden Welle auf. Mithin ist die Querschnittöffnung in einer jeweiligen ansteigenden Welle identisch zu der Querschnittöffnung in einer jeweiligen abfallenden Welle. Die jeweilige erste und zweite Querschnittöffnung sind vorteilhafterweise miteinander verbunden und bilden dadurch eine gemeinsame Aussparung aus.

Bevorzugt ist die gleichbleibende Querschnittöffnung der mindestens einen dritten Lochreihe kleiner als die jeweilige größere Querschnittöffnung der mindestens einen ersten und/oder zweiten Lochreihe. Dadurch wird die Durchströmung der Gasdiffusionslage durch zusätzliche Querströmungen in einem Stegbereich nochmals erhöht.

Die Erfindung schließt die technische Lehre ein, dass die jeweilige Querschnittöffnung durch Stanzen der gewellten Platte herstellbar ist, wobei die Form der jeweiligen Querschnittöffnung zumindest teilweise oval und/oder eckig ausgebildet ist. Alternativ kann die jeweilige Querschnittöffnung auch anderweitig in die gewellte Platte eingebracht werden, insbesondere durch Laserschneiden. Ebenso kann eine ebene Platte zunächst gestanzt werden und dann in die gewellte Platte durch Umformen überführt werden. Ferner kann die Form eine ovale beziehungsweise abgeschrägt ovale Form, eine dreieckige Form oder eine rechteckige beziehungsweise eine aus mindestens zwei unterschiedlich großen Rechtecken bestehende Form sein. Ebenso kann die Form ein Vieleck aufweisen.

Ferner bevorzugt sind alle Querschnittöffnungen in Strömungsrichtung des Gases sukzessive im gleichen Verhältnis verringert. Insbesondere nimmt die Breite einer jeweiligen Querschnittöffnung in Strömungsrichtung des Gases sukzessive im gleichen Verhältnis ab. Mit anderen Worten werden alle in einer Reihe befindlichen Querschnittöffnungen in Strömungsrichtung des Gases immer kleiner, wodurch stromabwärts eine Abreicherung in der Durchflussrate erfolgt. Insbesondere sind alle Querschnittöffnungen in Strömungsrichtung des Gases derart sukzessive im gleichen Verhältnis verringert, dass die ansonsten durch die Abreicherung des Reaktionsgases verursachte Verringerung der Strömungsgeschwindigkeit auf einem konstanten Niveau gehalten wird. Dadurch werden eine gleichmäßigere Gasdurchmischung und ein besserer Wasserabtransport im strömungsabwärts liegenden Teil des Strömungsfeldes gewährleistet.

Vorzugsweise ist die zweite Platte eben oder gewellt ausgebildet und kommt zumindest teilweise an Abschnitten, insbesondere planen Scheitelabschnitten, der Wellenform der gewellten Platte zur Anlage, die in einer Ebene oder jeweils in einer Ebene liegen. Unter einer ebenen Platte ist eine makroskopisch glatte Platte ohne Wellen, Beulen oder Ausnehmungen zu verstehen. Demgegenüber ist die gewellte Ausbildung der zweiten Platte von einer regelmäßigen Wellenform aus ansteigenden und abfallenden Wellen geprägt. Die Wellen der zweiten Platte sind parallel zu den Wellen der gewellten Platte ausgebildet. Die Wellenform der zweiten Platte kann sich sowohl in der Wellenform, Wellenhöhe und Wellenlänge von der Wellenform der ersten Platte unterscheiden. Dadurch ergeben sich zwischen der gewellten Platte und der zweiten Platte zusätzliche Gasströmungen in Richtung der Gasdiffusionslage und damit in Richtung der Katalysatorschicht. Die Abschnitte an der gewellten Platte, an denen die zweite Platte zur Anlage kommt, bieten in Summe eine ausreichend große Auflagefläche für die zweite Platte an der gewellten Platte für einen ausreichend guten elektrischen Kontakt.

Ferner betrifft die Erfindung eine Brennstoffzelle mit mindestens einer solchen Bipolarplatte. Die Brennstoffzelle umfasst eine Vielzahl von Zellen, wobei die jeweilige Zelle eine Bipolarplatte, eine Gasdiffusionslage und eine Katalysatorschicht jeweils auf Kathoden- und Anodenseite, die durch eine Membran elektrisch getrennt sind, umfasst.

Weitere die Erfindung verbessernde Maßnahmen werden nachstehend gemeinsam mit der Beschreibung bevorzugter Ausführungsbeispiele der Erfindung anhand der Figuren näher dargestellt, wobei gleiche oder ähnliche Elemente mit dem gleichen Bezugszeichen versehen sind. Hierbei zeigt
- Figur 1: eine schematische Ansicht einer von vielen Zellen einer Brennstoffzelle, wobei die Zelle zwei Bipolarplatten aufweist,
- Figur 1a: eine schematische Draufsicht einer gewellten Platte einer Bipolarplatte gemäß einem ersten Ausführungsbeispiel,
- Figur 1b: eine schematische Schnittdarstellung durch eine erste Lochreihe der gewellten Platte gemäß Figur 1a,
- Figur 1c: eine schematische Schnittdarstellung durch eine zweite Lochreihe der gewellten Platte gemäß Figur 1a,
- Figur 2a: eine schematische Perspektivdarstellung der gewellten Platte gemäß Figur 1a,
- Figur 2b: eine schematische Frontansicht in Strömungsrichtung eines Gases durch die gewellte Platte gemäß Figur 2a,
- Figur 3a: eine schematische Draufsicht einer gewellten Platte einer Bipolarplatte gemäß einem zweiten Ausführungsbeispiel,
- Figur 3b: eine schematische Schnittdarstellung durch eine erste Lochreihe der gewellten Platte gemäß Figur 3a,
- Figur 3c: eine schematische Schnittdarstellung durch eine zweite Lochreihe der gewellten Platte gemäß Figur 3a,
- Figur 3d: eine schematische Schnittdarstellung durch eine dritte Lochreihe der gewellten Platte gemäß Figur 3a,
- Figur 4a: eine schematische Perspektivdarstellung der gewellten Platte gemäß Figur 3a,
- Figur 4b: eine schematische Frontansicht in Strömungsrichtung eines Gases durch die gewellte Platte gemäß Figur 4a,
- Figur 5a: eine schematische Draufsicht einer gewellten Platte einer Bipolarplatte gemäß einem dritten Ausführungsbeispiel,
- Figur 5b: eine schematische Schnittdarstellung durch eine Lochreihe der gewellten Platte gemäß Figur 5a,
- Figur 6a: eine schematische Perspektivdarstellung der gewellten Platte gemäß Figur 5a,
- Figur 6b: eine schematische Frontansicht in Strömungsrichtung eines Gases durch die gewellte Platte gemäß Figur 6a,
- Figur 7a: eine Draufsicht auf eine weitere gewellte Platte, und
- Figur 7b: eine Draufsicht auf eine noch weitere gewellte Platte.

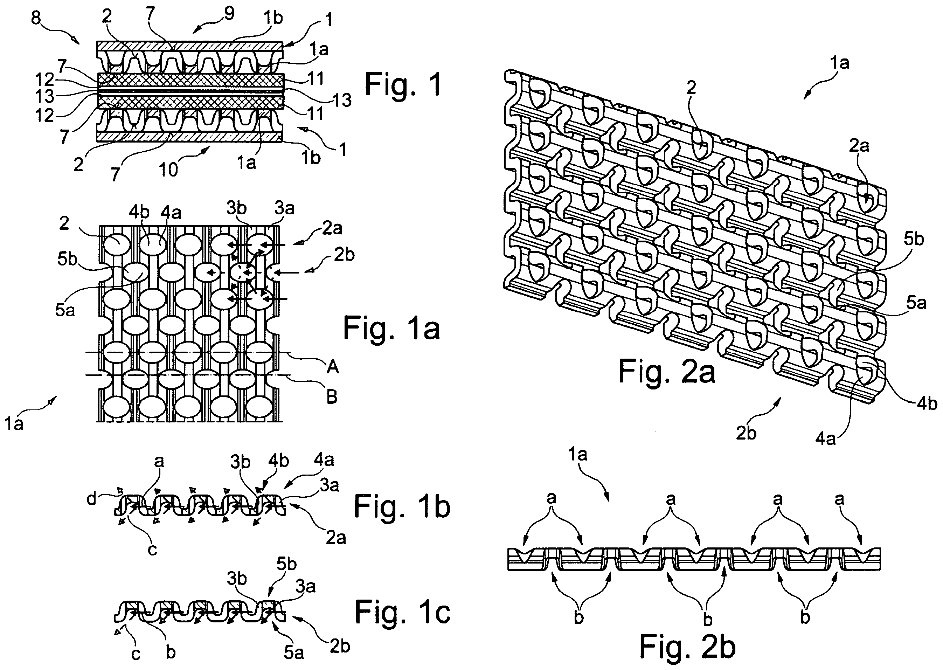

Gemäß Figur 1 umfasst eine Zelle 8 einer - hier nicht dargestellten - Brennstoffzelle sowohl anodenseitig 9 als auch kathodenseitig 10 jeweils eine Bipolarplatte 1, bestehend aus einer gewellte Platte 1a mit einem Lochmuster 2 und einer zweiten Platte 1b, die an der gewellten Platte 1a abdichtend angeordnet ist, jeweils eine Gasdiffusionslage 11 und jeweils eine Katalysatorschicht 12. Die beiden Katalysatorschichten 12 sind durch eine Membran 13 elektrisch voneinander getrennt. Das Lochmuster 2 an der jeweiligen Bipolarplatte 1 ist anodenseitig 9 zur Durchführung eines Brenngases und kathodenseitig 10 zur Durchführung eines Oxidationsmittels vorgesehen. Mittels der erfindungsgemäßen Bipolarplatten 1 wird eine homogene Verteilung des jeweiligen Gases in der jeweiligen Katalysatorschicht 12 erreicht. Die jeweilige zweite Platte 1b ist vorliegend eben ausgebildet und kommt zumindest teilweise an planen Scheitelabschnitten 7 der Wellenform der gewellten Platte 1a zur Anlage, die in einer Ebene liegen. Auf der jeweils entgegengesetzten Seite der gewellten Platte 1a kommt die jeweilige Gasdiffusionslage 11 an planen Scheitelabschnitten 7 der Wellenform der gewellten Platte 1a zur Anlage, die in einer Ebene liegen.

Figur 1a zeigt eine gewellte Platte 1a einer Bipolarplatte 1 mit einem Lochmuster 2, bestehend aus ersten und zweiten Lochreihen 2a, 2b, die abwechselnd nebeneinander angeordnet sind. Zur Vereinfachung wurde vorliegend und in den nachfolgenden Darstellungen auf die Abbildung der zweiten Platte 1b der Bipolarplatte 1 verzichtet. Die gewellte Platte 1a ist aus einem Metallblech ausgebildet und weist eine regelmäßige Wellenform aus ansteigenden und abfallenden Wellen 3a, 3b auf. Die Lochreihen 2a, 2b des Lochmusters 2 sind zur Durchführung eines Gases (siehe waagrecht verlaufende Pfeile am rechten Rand der gewellten Platte 1a) vorgesehen und im Wesentlichen quer zu der Wellenform ausgebildet. Dabei wird die gewellte Platte 1a in Anströmrichtung hier von rechts nach links in der Papierebene von dem Gas angeströmt. Das Gas strömt die gewellte Platte 1a also in der Draufsicht gesehen in einer Anströmrichtung senkrecht zu den Wellenscheiteln der Wellen 3a, 3b an. Im Bereich eines Loches des Lochmusters angekommen, wird dieses Loch anströmt und das Gas in einem Winkelbereich von - 45° bis + 45°, ausgehend von einer in der Draufsicht auf die gewellte Platte 1a senkrecht zum jeweiligen Wellenscheitel verlaufenden Linie, weitergeleitet.

Gemäß Figur 1b, die eine Schnittdarstellung durch die erste Lochreihe 2a gemäß Figur 1a entlang einer Schnittlinie A darstellt, sind die jeweiligen ersten Querschnittöffnungen 4a in Strömungsrichtung des Gases in einer jeweiligen ansteigenden Welle 3a größer als die jeweiligen zweiten Querschnittöffnungen 4b in einer jeweiligen abfallenden Welle 3b.

Nach Figur 1c, die eine Schnittdarstellung durch die zweite Lochreihe 2b gemäß Figur 1a entlang einer Schnittlinie B darstellt, sind die jeweiligen ersten Querschnittöffnungen 5a in Strömungsrichtung des Gases in einer jeweiligen ansteigenden Welle 3a größer als die jeweiligen zweiten Querschnittöffnungen 5b in einer jeweiligen abfallenden Welle 3b.

Ein erster Gasströmungspfad a befindet sich, wie in Figur 1b dargestellt, zwischen der gewellten Platte 1a und der auf der einen Seite zur Anlage kommenden zweiten Platte 1b. Ein zweiter Gasströmungspfad b befindet sich, wie in Figur 1c dargestellt, zwischen der gewellten Platte 1a und der auf der anderen Seite zur Anlage kommenden Gasdiffusionslage. Dadurch, dass die jeweiligen ersten Querschnittöffnungen 4a, 5a in Strömungsrichtung des Gases in einer jeweiligen ansteigenden Welle 3a größer sind als die jeweiligen zweiten Querschnittöffnungen 4b, 5b in einer jeweiligen abfallenden Welle 3b ergibt sich jeweils eine Gasströmung in Richtung der Gasdiffusionslage, die mit den schrägen Pfeilen c, d in den Figuren 1b und 1c veranschaulicht ist.

Zusätzlich ergeben sich quer dazu Strömungen in den Wellenkanälen aufgrund der sich vermindernden Querschnittöffnungen 4b, 5b. Dabei bilden sich die Strömungen sowohl in den an der zweiten Platte 1b angrenzenden Wellenkanälen, was anhand der schrägen Pfeile mit durchgehender Linie in Figur 1a dargestellt ist als auch in den an der Gasdiffusionslage angrenzenden Wellenkanälen, was anhand der schrägen Pfeile mit gestrichelter Linie in Figur 1a dargestellt ist. Dadurch wird zum einen eine verbesserte Gasdurchmischung in der Gasdiffusionslage in diesem Bereich erzeugt, als auch der Wasseraustrag aus der Gasdiffusionslage verbessert.

Figur 2a zeigt eine perspektivische Darstellung der gewellte Platte 1a gemäß Figur 1a. Aus Figur 2a geht besonders gut die Wellenform der gewellten Platte 1a hervor. Das Lochmuster 2 ist in der Wellenform derart ausgebildet, dass die Querschnittöffnungen 4a, 4b der jeweils ersten Lochreihe 2a auf einer Seite der gewellten Platte 1a positioniert sind und die Querschnittöffnungen 5a, 5b der jeweils zweiten Lochreihe 2b auf einer anderen Seite der gewellten Platte 1a positioniert sind. Damit ergeben sich zwei unterschiedliche sich wiederholende Gaskanäle, die quer zu der Wellenform der gewellten Platte 1a angeordnet sind. Das Lochmuster 2 wurde durch Stanzen der gewellten Platte 1a hergestellt. Die gewellte Platte 1a kann sowohl vor als auch nach dem Stanzen umgeformt werden. Die Form der jeweiligen Querschnittöffnung 4a, 4b, 5a, 5b ist zumindest teilweise oval ausgebildet.

Figur 2b zeigt eine Frontansicht in Strömungsrichtung eines Gases der in Figur 2a dargestellten gewellten Platte 1a. Aus dieser Ansicht gehen besonders gut die beiden Gasströmungspfade a, b hervor, die abwechselnd nebeneinander quer zur Wellenform ausgebildet sind.

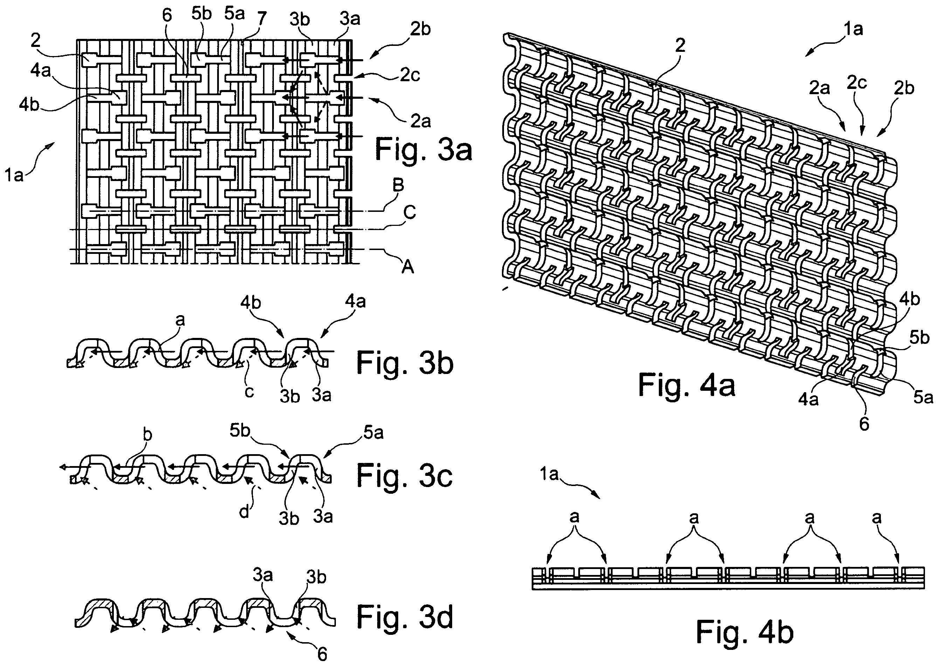

Figur 3a zeigt eine weitere Ausführungsform einer gewellten Platte 1a einer Bipolarplatte 1 mit einem Lochmuster 2, bestehend aus ersten, zweiten und dritten Lochreihen 2a, 2b, 2c die abwechselnd nebeneinander angeordnet sind. Zur Vereinfachung wurde vorliegend und in den nachfolgenden Darstellungen auf die Abbildung der zweiten Platte 1b der Bipolarplatte 1 verzichtet. Die gewellte Platte 1a ist aus einem Metallblech ausgebildet und weist eine regelmäßige Wellenform aus ansteigenden und abfallenden Wellen 3a, 3b auf. Die Lochreihen 2a, 2b, 2c des Lochmusters 2 sind zur Durchführung eines Gases vorgesehen und im Wesentlichen quer zu der Wellenform ausgebildet.

Gemäß Figur 3b, die eine Schnittdarstellung durch die erste Lochreihe 2a gemäß Figur 3a entlang einer Schnittlinie A darstellt, sind die jeweiligen ersten Querschnittöffnungen 4a in Strömungsrichtung des Gases in einer jeweiligen ansteigenden Welle 3a größer als die jeweiligen zweiten Querschnittöffnungen 4b in einer jeweiligen abfallenden Welle 3b.

Nach Figur 3c, die eine Schnittdarstellung durch die zweite Lochreihe 2b gemäß Figur 3a entlang einer Schnittlinie B darstellt, sind die jeweiligen ersten Querschnittöffnungen 5a in Strömungsrichtung des Gases in einer jeweiligen ansteigenden Welle 3a kleiner als die jeweiligen zweiten Querschnittöffnungen 5b in einer jeweiligen abfallenden Welle 3b.

Nach Figur 3d, die eine Schnittdarstellung entlang der durch die dritte Lochreihe 2c gemäß Figur 3a führende Schnittlinie C darstellt, sind die jeweiligen Querschnittöffnung 6 in Strömungsrichtung des Gases gleichbleibende ausgebildet.

Ein Gasströmungspfad a befindet sich, wie in den Figuren 3b und 3c dargestellt, zwischen der gewellten Platte 1a und der auf der einen Seite zur Anlage kommenden zweiten Platte 1b. Die jeweiligen Querschnittöffnung 4a, 4b der ersten Lochreihe 2a bewirken gemäß Figur 3b einen zusätzlichen Gasströmungspfad c in Richtung Gasdiffusionslage. Ferner bewirken die jeweiligen Querschnittöffnung 5a, 5b der zweiten Lochreihe 2b gemäß Figur 3c einen zusätzlichen Gasströmungspfad d aus der Gasdiffusionslage. Die ersten und zweiten Lochreihen 2a, 2b sind in Strömungsrichtung versetzt zueinander angeordnet und ermöglicht dadurch, dass das Gas zusätzlich quer entlang der Wellenform strömt. Dies ist in Figur 3a durch die schrägen Pfeile mit gestrichelter Linie dargestellt. Dadurch wird die Gasdurchmischung in der Gasdiffusionslage in diesem Bereich verbessert. Die Querschnittöffnungen 6 der dritten Lochreihe 2c sind kleiner als die jeweilige größere Querschnittöffnung 4a, 5b der ersten und zweiten Lochreihe 2a, 2b. Die dritte Lochreihe 2c ist an den planen Scheitelabschnitten 7 der gewellten Platte 1a in Richtung der Gasdiffusionslage angeordnet. Dadurch ergeben sich zusätzliche Unterströmungen in diesem Bereich, die sowohl die Gasdurchmischung in der Gasdiffusionslage erhöhen, als auch den Wasseraustrag aus der Gasdiffusionslage fördern. Die zusätzlichen Gasströmungspfade sind in Figur 3d anhand der gestrichelten Pfeile veranschaulicht.

Figur 4a zeigt eine perspektivische Darstellung der gewellte Platte 1a gemäß Figur 3a. Aus Figur 4a geht besonders gut die Wellenform der gewellten Platte 1a hervor. Das Lochmuster 2 ist in der Wellenform derart ausgebildet, dass die Querschnittöffnungen 4a, 4b, 5a, 5b der jeweils ersten und zweiten Lochreihe 2a, 2b auf einer Seite der gewellten Platte 1a positioniert sind und die Querschnittöffnungen 6 der jeweils dritten Lochreihe 2c auf einer anderen Seite der gewellten Platte 1a positioniert sind. Das Lochmuster 2 wurde durch Stanzen der gewellten Platte 1a hergestellt. Die Form der Querschnittöffnungen 4a, 4b, 5a, 5b der ersten und zweiten Lochreihe 2a, 2b setzt sich aus zwei Rechtecken zusammen, wobei die Form der Querschnittöffnungen 6 der dritten Lochreihe 2c aus einem Rechteck ausgebildet ist.

Figur 4b zeigt eine Frontansicht in Strömungsrichtung eines Gases der in Figur 2a dargestellten gewellten Platte 1a. Aus dieser Ansicht geht besonders gut der Gasströmungspfad a hervor.

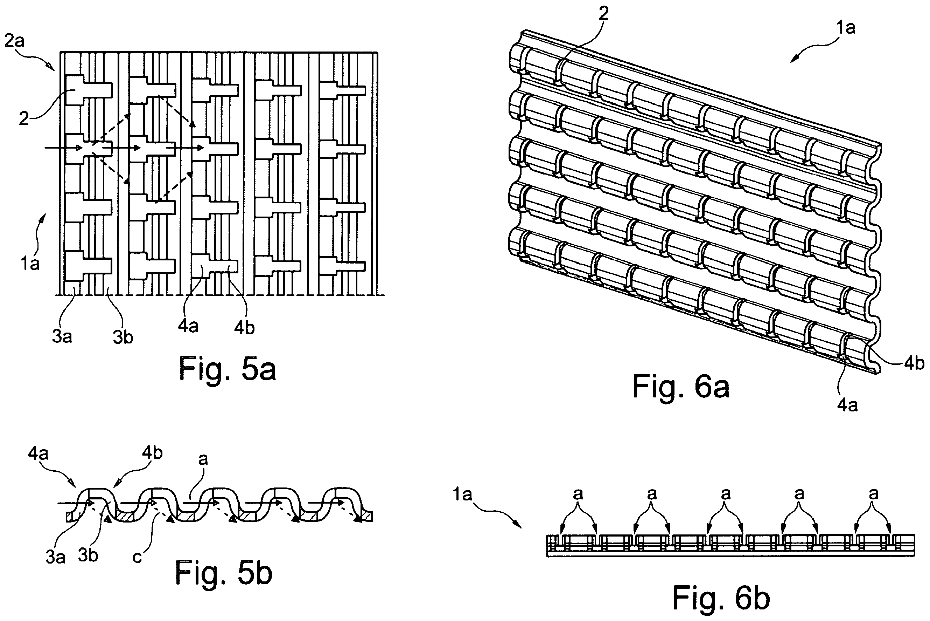

Figur 5a zeigt eine gewellte Platte 1a einer Bipolarplatte 1 mit einem Lochmuster 2, bestehend aus mehreren identisch ausgebildeten Lochreihen 2a, die quer zu einer regelmäßigen Wellenform aus ansteigenden und abfallenden Wellen 3a, 3b ausgebildet ist. Zur Vereinfachung wurde vorliegend und in den nachfolgenden Darstellungen auf die Abbildung der zweiten Platte 1b der Bipolarplatte 1 verzichtet. Die gewellte Platte 1a ist aus einem Metallblech ausgebildet. Das Lochmuster 2 ist zur Durchführung eines Gases vorgesehen. Alle Querschnittöffnungen 4a, 4b der jeweiligen Lochreihe 2a sind in Strömungsrichtung des Gases sukzessive im gleichen Verhältnis verringert. Dabei wird die Breite der Querschnittöffnungen 4a, 4b verringert. Dadurch wird insbesondere der Reaktandenverbrauch an der Katalysatorschicht berücksichtigt. Um die Strömungsgeschwindigkeit vom Eintritt bis zum Austritt der Bipolarplatte 1 annähernd gleich zu halten, werden die in der Wellenform eingebrachten Querschnittöffnungen 4a, 4b entsprechend der sich ergebenden Verringerung des Gasstroms verkleinert. Durch diese Anpassung wird der Verringerung der Strömungsgeschwindigkeit durch die Abreaktion des Reaktionsgases entgegengewirkt. Mithin steigt der Druckverlust über die Strömungslänge an.

Gemäß Figur 5b, die eine Schnittdarstellung entlang der Lochreihe 2a gemäß Figur 5a darstellt, sind die jeweiligen ersten Querschnittöffnungen 4a in Strömungsrichtung des Gases in einer jeweiligen ansteigenden Welle 3a größer als die jeweiligen zweiten Querschnittöffnungen 4b in einer jeweiligen abfallenden Welle 3b. Ein Gasströmungspfad a befindet sich, wie in Figur 5b dargestellt, zwischen der gewellten Platte 1a und der auf der einen Seite zur Anlage kommenden zweiten Platte 1b. Die jeweiligen Querschnittöffnungen 4a, 4b bewirken gemäß Figur 5b einen zusätzlichen Gasströmungspfad in Richtung Gasdiffusionslage. Der zusätzliche Gasströmungspfad ist in Figur 5b anhand des gestrichelten Pfeils c veranschaulicht.

Figur 6a zeigt eine perspektivische Darstellung der gewellte Platte 1a gemäß Figur 5a. Aus Figur 6a geht besonders gut die Wellenform der gewellten Platte 1a hervor. Das Lochmuster 2 ist in der Wellenform derart ausgebildet, dass alle Querschnittöffnungen 4a, 4b auf einer Seite der gewellten Platte 1a positioniert sind. Das Lochmuster 2 wird durch Stanzen der gewellten Platte 1a hergestellt. Die Form der Querschnittöffnungen 4a, 4b setzt sich aus zwei Rechtecken zusammen.

Figur 6b zeigt eine Frontansicht in Strömungsrichtung des Gases der in Figur 6a dargestellten gewellten Platte 1a. Aus dieser Ansicht geht besonders gut der Gasströmungspfad a hervor.

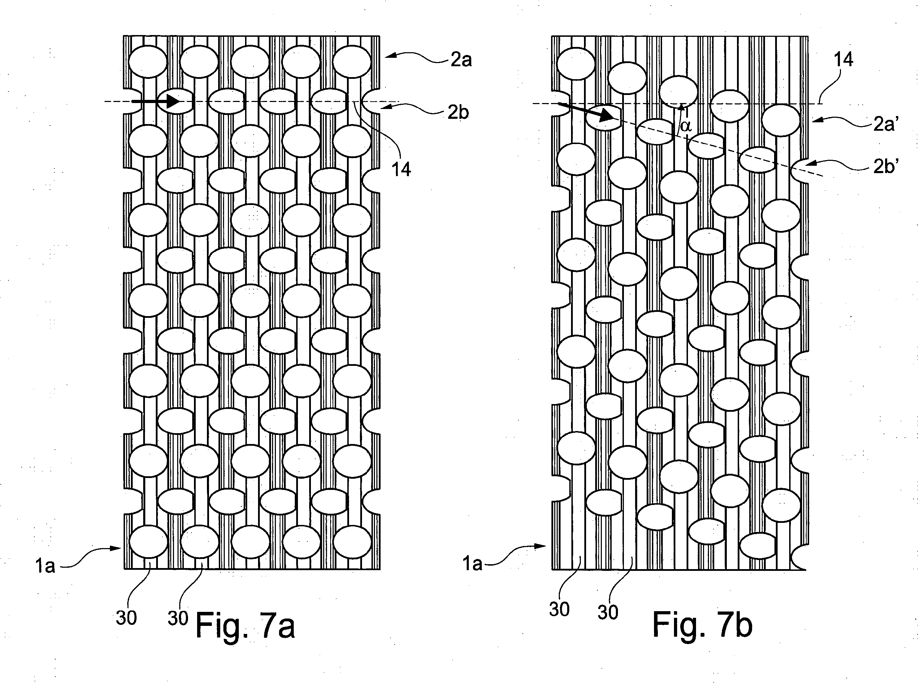

Figur 7a zeigt eine Draufsicht auf eine gewellte Platte 1a, bei der mehrere Lochreihen 2a, 2b vorhanden sind. Das Gas strömt die gewellte Platte 1a in einer Anströmrichtung an, die einer Linie 14 folgt, die senkrecht zu den Wellenscheiteln 30 ausgerichtet ist. Im Bereich eines jeden Loches wird das Gas in einem Winkelbereich von -45° bis + 45° verteilt.

Figur 7b zeigt eine Draufsicht auf eine gewellte Platte 1a, bei der jede Lochreihe 2a', 2b' in einem Winkel α von 45° zur Linie 14, die senkrecht zu den Wellenscheiteln 30 ausgerichtet ist, verläuft. Das Gas strömt die gewellte Platte 1a der Linie 14 folgend an und wird erneut an jedem Loch verteilt.

Die Erfindung ist nicht beschränkt auf die vorstehend beschriebenen Ausführungsbeispiele. Alternativ kann die zweite Platte 1b in Figur 1 auch gewellt ausgebildet sein. Ferner können die Querschnittöffnungen 4a, 4b, 5a, 5b, 6 auch andere Formen aufweisen. Ebenso kann das Lochmuster 2 weitere Lochreihen aufweisen und/oder diese in anderen Winkeln α verlaufen.

### Bezugszeichenliste

- 1: Bipolarplatte
- 1a: gewellte Platte
- 1b: zweite Platte
- 2: Lochmuster
- 2a, 2a': erste Lochreihe
- 2b, 2b': zweite Lochreihe
- 2c: dritte Lochreihe
- 3a: ansteigende Welle
- 3b: abfallende Welle
- 4a: erste Querschnittöffnung
- 4b: zweite Querschnittöffnung
- 5a: erste Querschnittöffnung
- 5b: zweite Querschnittöffnung
- 6: gleichbleibende Querschnittöffnung
- 7: planer Scheitelabschnitt
- 8: Zelle
- 9: anodenseitig
- 10: kathodenseitig
- 11: Gasdiffusionslage
- 12: Katalysatorschicht
- 13: Membran
- 14: Linie
- 30: Wellenscheitel
- A: Schnittlinie entlang einer ersten Lochreihe
- B: Schnittlinie entlang einer zweiten Lochreihe
- C: Schnittlinie entlang einer dritten Lochreihe
- α: Winkel
- a: erster Gasströmungspfad
- b: zweiter Gasströmungspfad
- c, d: zusätzlicher Gasströmungspfad

## Patentansprüche

1. Bipolarplatte (1) für eine Brennstoffzelle, umfassend eine gewellte Platte (1a) mit einem Lochmuster (2), bestehend aus mindestens einer ersten Lochreihe (2a), sowie eine zweite Platte (1b), die an der gewellten Platte (1a) abdichtend angeordnet ist, wobei die gewellte Platte (1a) aus einem Metallblech ausgebildet ist und eine regelmäßige Wellenform aus ansteigenden und abfallenden Wellen (3a, 3b) mit Wellenscheiteln (30) aufweist, wobei ferner das Lochmuster (2) zur Durchführung eines Gases im Wesentlichen quer zu der Wellenform vorgesehen ist, wobei in der Draufsicht auf die gewellte Platte (1a) eine Anströmrichtung der gewellten Platte (1a) senkrecht zu einem Rand der gewellten Platte (1a) und zu den Wellenscheiteln (30) ausgerichtet ist,
**dadurch gekennzeichnet, dass** die mindestens eine erste Lochreihe (2a), in Strömungsrichtung des Gases eine jeweilige erste Querschnittöffnung (4a) in einer jeweiligen ansteigenden Welle (3a) aufweist, die größer ist als eine jeweilige zweite Querschnittöffnung (4b) der mindestens einen ersten Lochreihe (2a) in einer jeweiligen abfallenden Welle (3b).

2. Bipolarplatte (1) nach Anspruch 1,
**dadurch gekennzeichnet, dass** das Lochmuster (2) mindestens eine zweite Lochreihe (2b) aufweist, die parallel zur ersten Lochreihe (2a) und quer zu der Wellenform ausgebildet ist.

3. Bipolarplatte (1) nach Anspruch 2,
**dadurch gekennzeichnet, dass** die mindestens eine zweite Lochreihe (2b) in Strömungsrichtung des Gases eine jeweilige erste Querschnittöffnung (5a) in einer jeweiligen ansteigenden Welle (3a) aufweist, die kleiner oder größer ist als eine jeweilige zweite Querschnittöffnung (5b) der mindestens einen zweiten Lochreihe (2b) in einer jeweiligen abfallenden Welle (3b).

4. Bipolarplatte (1) nach einem der vorhergehenden Ansprüche,
**dadurch gekennzeichnet, dass** das Lochmuster (2) mindestens eine dritte Lochreihe (2c) aufweist, die parallel zur ersten Lochreihe (2a) und quer zu der Wellenform ausgebildet ist.

5. Bipolarplatte (1) nach Anspruch 4,
**dadurch gekennzeichnet, dass** die mindestens eine dritte Lochreihe (2c) in Strömungsrichtung des Gases eine gleichbleibende Querschnittöffnung (6) in einer jeweiligen ansteigenden und einer jeweiligen abfallenden Welle (3a, 3b) aufweist.

6. Bipolarplatte (1) nach Anspruch 5,
**dadurch gekennzeichnet, dass** die gleichbleibende Querschnittöffnung (6) der mindestens einen dritten Lochreihe (2c) kleiner ist als die jeweilige größere Querschnittöffnung (4a, 5b) der mindestens einen ersten und/oder zweiten Lochreihe (2a, 2b).

7. Bipolarplatte (1) nach einem der vorhergehenden Ansprüche,
**dadurch gekennzeichnet, dass** die jeweilige Querschnittöffnung (4a, 4b, 5a, 5b, 6) durch Stanzen der gewellten Platte (1a) herstellbar ist, wobei die Form der jeweiligen Querschnittöffnung (4a, 4b, 5a, 5b, 6) zumindest teilweise oval und/oder eckig ausgebildet ist.

8. Bipolarplatte (1) nach einem der vorhergehenden Ansprüche,
**dadurch gekennzeichnet, dass** alle Querschnittöffnungen (4a, 4b, 5a, 5b, 6) in Strömungsrichtung des Gases sukzessive im gleichen Verhältnis verringert sind.

9. Bipolarplatte (1) nach einem der vorhergehenden Ansprüche,
**dadurch gekennzeichnet, dass** die zweite Platte (1b) eben oder gewellt ausgebildet ist und zumindest teilweise an Abschnitten, insbesondere planen Scheitelabschnitten (7), der Wellenform der gewellten Platte (1a) zur Anlage kommt.

10. Brennstoffzelle mit mindestens einer Bipolarplatte (1) nach einem der vorhergehenden Ansprüche.

## Claims

1. A bipolar plate (1) for a fuel cell, comprising a corrugated plate (1a) with a hole pattern (2) consisting of at least one first row of holes (2a), as well as a second plate (1b) which is arranged on the corrugated plate (1a) in a sealing manner, wherein the corrugated plate (1a) is made of a sheet metal and has a uniform waved shape of ascending and descending waves (3a, 3b) with wave crests (30), wherein the hole pattern (2) is furthermore provided for the passage of a gas substantially transversely to the waved shape, wherein in the plan view of the corrugated plate (1a) a direction of flow of the corrugated plate (1a) is aligned perpendicular to an edge of the corrugated plate (1a) and to the wave crests (30),
**characterised in that** the at least one first row of holes (2a) has, in the flow direction of the gas, a respective first cross-sectional opening (4a) in a respective ascending wave (3a), which is larger than a respective second cross-sectional opening (4b) of the at least one first row of holes (2a) in a respective descending wave (3b).

2. The bipolar plate (1) according to claim 1,
**characterised in that** the hole pattern (2) has at least one second row of holes (2b) which is parallel to the first row of holes (2a) and formed transversely to the waved shape.

3. The bipolar plate (1) according to claim 2,
**characterised in that** the at least one second row of holes (2b) has, in the flow direction of the gas, a respective first cross-sectional opening (5a) in a respective ascending wave (3a), which is smaller than or larger than a respective second cross-sectional opening (5b) of the at least one second row of holes (2b) in a respective descending wave (3b).

4. The bipolar plate (1) according to any one of the preceding claims,
**characterised in that** the hole pattern (2) has at least one third row of holes (2c) which is parallel to the first row of holes (2a) and formed transversely to the waved shape.

5. The bipolar plate (1) according to claim 4,
**characterised in that** the at least one third row of holes (2c) has, in the flow direction of the gas, a constant cross-sectional opening (6) in a respective ascending wave and respective descending wave (3a, 3b).

6. The bipolar plate (1) according to claim 5,
**characterised in that** the constant cross-sectional opening (6) of the at least one third row of holes (2c) is smaller than the respective larger cross-sectional opening (4a, 5b) of the at least one first and/or second row of holes (2a, 2b).

7. The bipolar plate (1) according to any one of the preceding claims,
**characterised in that** the respective cross-sectional opening (4a, 4b, 5a, 5b, 6) can be produced by punching the corrugated plate (1a), wherein the shape of the respective cross-sectional opening (4a, 4b, 5a, 5b, 6) is formed to be at least partially oval and/or square.

8. The bipolar plate (1) according to any one of the preceding claims,
**characterised in that** all cross-sectional openings (4a, 4b, 5a, 5b, 6) in the direction of flow of the gas are successively reduced in the same ratio.

9. The bipolar plate (1) according to any one of the preceding claims,
**characterised in that** the second plate (1b) is flat or corrugated and at least partially comes to rest on sections, in particular planar apex sections (7), of the waved shape of the corrugated plate (1a).

10. A fuel cell having at least one bipolar plate (1) according to any one of the preceding claims.

## Revendications

1. Plaque bipolaire (1) pour pile à combustible, comprenant une plaque ondulée (1a) avec un motif de trous (2) constitué d'au moins une première rangée de trous (2a), ainsi qu'une deuxième plaque (1b) qui est disposée de manière étanche sur la plaque ondulée (1a), la plaque ondulée (1a) étant formée à partir d'une tôle métallique et ayant une forme d'onde régulière formée d'ondes montantes et descendantes (3a, 3b) avec des crêtes d'ondes (30), le motif de trous (2) étant en outre prévu essentiellement transversalement à la forme d'onde pour le passage d'un gaz, dans la vue de dessus plan de la plaque ondulée (1a), une direction d'écoulement de la plaque ondulée (1a) étant orientée perpendiculairement à un bord de la plaque ondulée (1a) et aux crêtes d'ondes (30),
**caractérisée en ce que** l'au moins une première rangée de trous (2a) présente, dans la direction d'écoulement du gaz, une première ouverture transversale (4a) respective dans une onde montante (3a) respective qui est plus grande qu'une seconde ouverture transversale (4b) respective de l'au moins une première rangée de trous (2a) dans une onde descendante (3b) respective.

2. Plaque bipolaire (1) selon la revendication 1,
**caractérisée en ce que** le motif de trous (2) présente au moins une deuxième rangée de trous (2b) qui est parallèle à la première rangée de trous (2a) et transversale à la forme d'onde.

3. Plaque bipolaire (1) selon la revendication 2,
**caractérisée en ce que** l'au moins une deuxième rangée de trous (2b) présente, dans la direction d'écoulement du gaz, une première ouverture transversale (5a) respective dans une onde montante (3a) respective qui est plus petite ou plus grande qu'une seconde ouverture transversale (5b) respective de l'au moins une deuxième rangée de trous (2b) dans une onde descendante (3b) respective.

4. Plaque bipolaire (1) selon l'une quelconque des revendications précédentes,
**caractérisée en ce que** le motif de trous (2) présente au moins une troisième rangée de trous (2c) qui est parallèle à la première rangée de trous (2a) et transversale à la forme d'onde.

5. Plaque bipolaire (1) selon la revendication 4,
**caractérisée en ce que** l'au moins une troisième rangée de trous (2c) présente, dans la direction d'écoulement du gaz, une ouverture transversale constante (6) dans une onde montante respective et une onde descendante (3a, 3b) respective.

6. Plaque bipolaire (1) selon la revendication 5,
**caractérisée en ce que** l'ouverture transversale constante (6) de l'au moins une troisième rangée de trous (2c) est plus petite que l'ouverture transversale plus grande (4a, 5b) respective de l'au moins une première et/ou deuxième rangée de trous (2a, 2b).

7. Plaque bipolaire (1) selon l'une quelconque des revendications précédentes,
**caractérisée en ce que** l'ouverture transversale (4a, 4b, 5a, 5b, 6) respective peut être réalisée par poinçonnage de la plaque ondulée (1a), la forme de l'ouverture transversale (4a, 4b, 5a, 5b, 6) respective étant au moins partiellement ovale et/ou carrée.

8. Plaque bipolaire (1) selon l'une quelconque des revendications précédentes,
**caractérisée en ce que** toutes les ouvertures transversales (4a, 4b, 5a, 5b, 6) sont successivement réduites dans le même rapport dans la direction d'écoulement du gaz.

9. Plaque bipolaire (1) selon l'une quelconque des revendications précédentes,
**caractérisée en ce que** la deuxième plaque (1b) est plane ou ondulée et vient reposer au moins partiellement sur des tronçons, en particulier des tronçons de crêtes plans (7), de la forme d'onde de la plaque ondulée (1a).

10. Pile à combustible comprenant au moins une plaque bipolaire (1) selon l'une quelconque des revendications précédentes.
